(19)

Europäisches
Patentamt
European
Patent Office
Office européen
des brevets

(11) **EP 4 645 930 A1**

(12) **EUROPEAN PATENT APPLICATION**
published in accordance with Art. 153(4) EPC

(43) Date of publication:
**05.11.2025 Bulletin 2025/45**

(21) Application number: **23912822.6**

(22) Date of filing: **22.12.2023**

(51) International Patent Classification (IPC):
*H04W 16/28* (2009.01)     *H04B 7/06* (2006.01)
*H04L 5/00* (2006.01)     *H04L 27/26* (2006.01)
*H04W 84/12* (2009.01)     *H04W 74/00* (2009.01)

(52) Cooperative Patent Classification (CPC):
**H04B 7/06; H04L 5/00; H04L 27/26; H04W 16/28;
H04W 74/00; H04W 84/12**

(86) International application number:
**PCT/KR2023/021418**

(87) International publication number:
**WO 2024/144147 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022  KR 20220186280
30.12.2022  KR 20220191145
05.01.2023  KR 20230001970**

(71) Applicant: **LG Electronics Inc.
Yeongdeungpo-gu
Seoul 07336 (KR)**

(72) Inventors:
• **PARK, Eunsung**
  **Seoul 06772 (KR)**
• **CHUN, Jinyoung**
  **Seoul 06772 (KR)**
• **CHOI, Jinsoo**
  **Seoul 06772 (KR)**
• **LIM, Dongguk**
  **Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING OR RECEIVING TRAINING INFORMATION IN WIRELESS LAN SYSTEM**

(57)     A method and a device for transmitting or receiving training information in a wireless LAN system are disclosed. A method performed by a first station (STA) in a wireless LAN system according to an embodiment of the present disclosure may comprise the steps of: generating one or more fields including R number of training (TRN) fields; and transmitting, to a second STA, a physical layer protocol data unit (PPDU) including a data field and the one or more fields located after the data field. Each of the R number of TRN fields may include N number of TRN units, and each of the N number of TRN units may include P number of TRN subfields.

**FIG.9**

EP 4 645 930 A1

**Description**

[TECHNICAL FIELD]

The present disclosure relates to a method and a device for transmitting or receiving training information in a wireless local area network (WLAN) system.

[BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

[Disclosure]

[Technical Problem]

The technical problem of the present disclosure is to provide a method and a device for transmitting or receiving training information based on a new physical layer protocol data unit (PPDU) format for simultaneous support of a transmit beam refinement protocol (BRP) and a receive BRP in a WLAN system.

The technical objects to be achieved by the present disclosure are not limited to the above-described technical objects, and other technical objects which are not described herein will be clearly understood by those skilled in the pertinent art from the following description.

[Technical Solution]

A method performed by a first station (STA) in a WLAN system according to an aspect of the present disclosure may include generating at least one field including R training (TRN) fields; and transmitting, to a second STA, a physical layer protocol data unit (PPDU) including a data field and the at least one field located after the data field. Each of the R TRN fields may include N TRN units, and each of the N TRN units may include P TRN subfields.

A method performed by a second station (STA) in a WLAN system according to an additional aspect of the present disclosure may include receiving a physical layer protocol data unit (PPDU) including a data field and at least one field located after the data field from a first STA; and performing a transmit (TX) beam refinement protocol (BRP) and a receive (RX) BRP based on the at least one field including R training (TRN) fields. Each of the R TRN fields may include N TRN units, and each of the N TRN units may include P TRN subfields.

[Technical Effects]

According to the present disclosure, a method and a device for transmitting or receiving training information based on a new physical layer protocol data unit (PPDU) format for simultaneous support of a transmit beam refinement protocol (BRP) and a receive BRP in a WLAN system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.

FIG. 2 is a diagram illustrating an exemplary structure of a WLAN system to which the present disclosure may be applied.

FIG. 3 is a diagram for describing a link setup process to which the present disclosure may be applied.

FIG. 4 is a diagram for describing a backoff process to which the present disclosure may be applied.

FIG. 5 is a diagram for describing a frame transmission operation based on CSMA/CA to which the present disclosure may be applied.

FIG. 6 is a diagram for describing an example of a frame structure used in a WLAN system to which the present disclosure may be applied.

FIG. 7 is a diagram illustrating examples of PPDUs defined in the IEEE 802.11 standard to which the present disclosure may be applied.

FIG. 8 is a diagram showing regional examples of channelization of a mmWave band to which the present disclosure may be applied.

FIG. 9 is a flowchart for describing an example of a method for transmitting training information according to the present disclosure.

FIG. 10 is a flowchart for describing an example of a method for receiving training information according to the present disclosure.

FIGS. 11 to 14 are a diagram showing examples of a BRP PPDU format according to the present disclosure.

FIG. 15 is a diagram showing examples of an additional BRP PPDU format according to the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

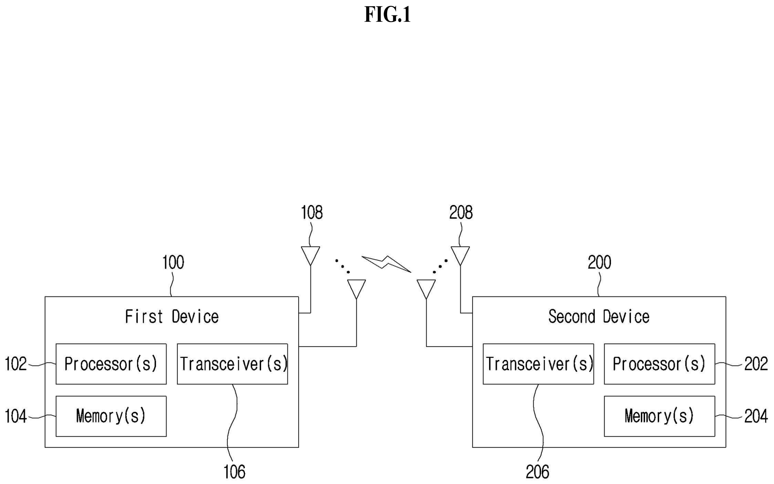

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

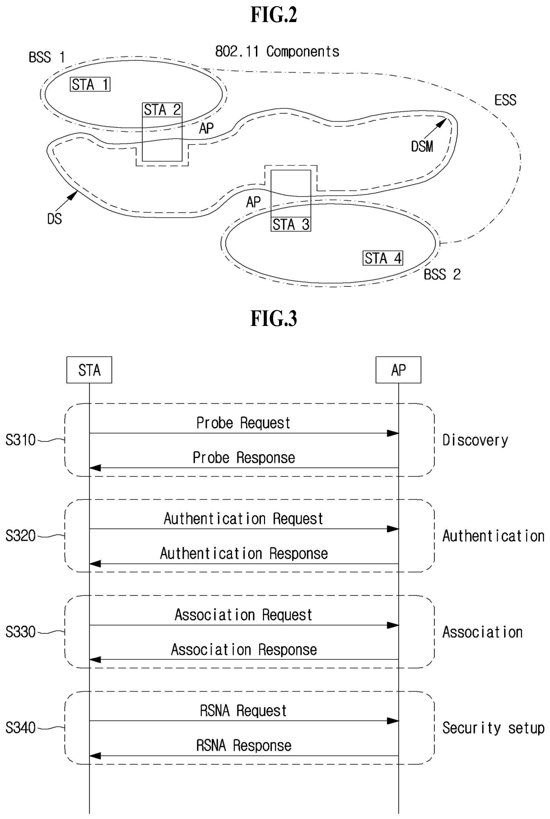

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

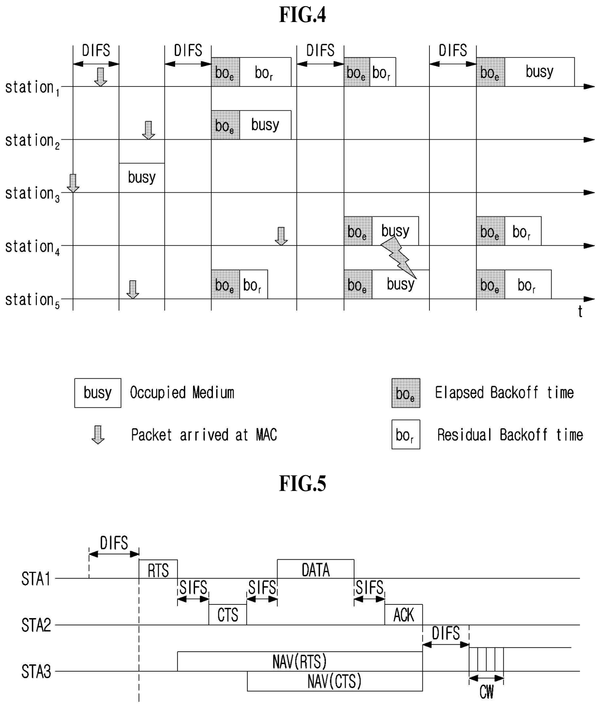

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to $2^n-1$ (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the

8

backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

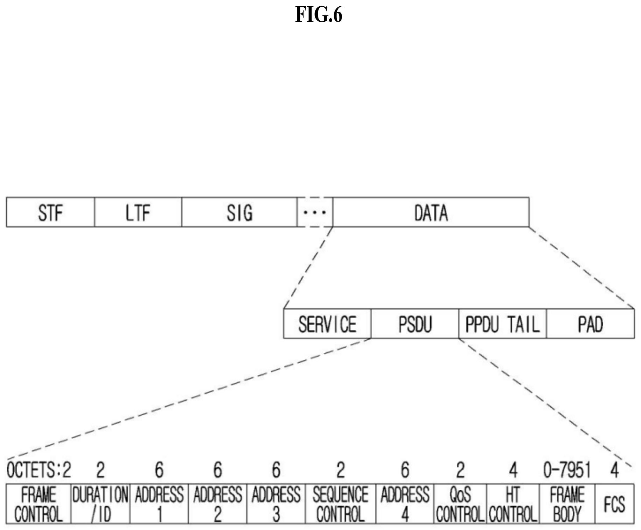

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

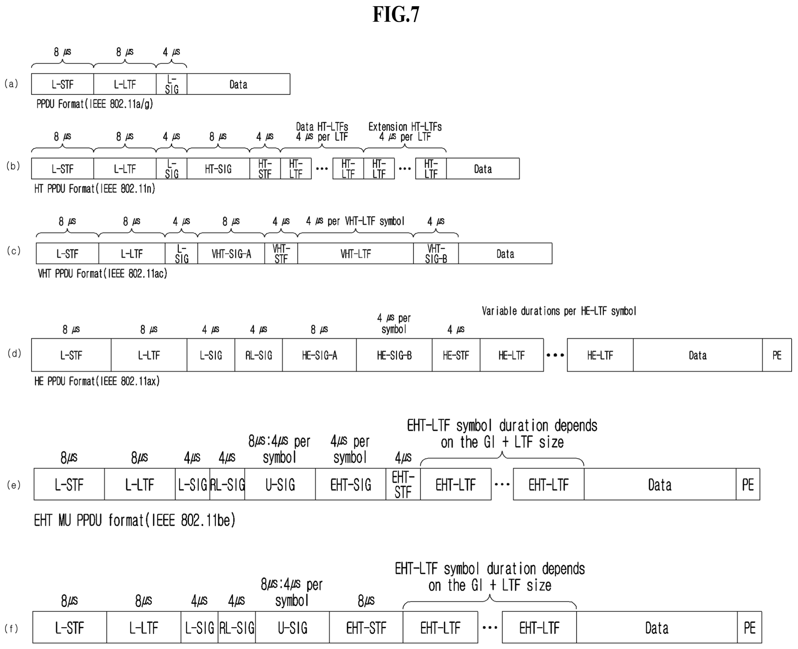

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types of) RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

Beam Refinement Protocol (BRP)

The description of a WLAN system described above may be mainly applied to a WLAN system operating in the existing operating frequency band, e.g., a sub-7GHz band (e.g., a 2.4GHz, 5GHz or 6GHz band). For example, the above-described PPDU format may be mainly applied to a WLAN system operating in a sub-7GHz band. In addition, a WLAN system operating in a high operating frequency band, e.g., a millimeter wave (mmWave) band such as a 60GHz band has been defined.

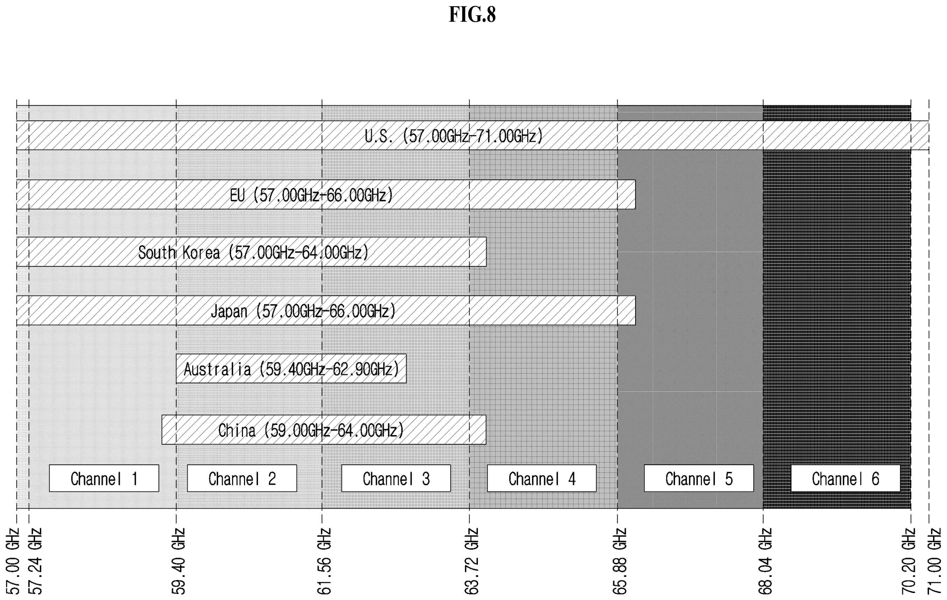

FIG. 8 is a diagram showing regional examples of channelization of a mmWave band to which the present disclosure may be applied.

An example in FIG. 8 shows a mmWave band used in the United States, the European Union, South Korea, Japan, Australia and China and shows the size and position of a channel defined in corresponding band. For example, the bandwidth of each of six channels may correspond to 2.16GHz. In addition, when bandwidth bonding is applied, up to four unit bandwidths may be bonded to support a bandwidth of up to 8.64GHz.

In the present disclosure, a mmWave band is described as including a 60GHz band, but a mmWave band is not limited to a 60GHz band.

As described above, a mmWave band may be used to improve the throughput, efficiency, etc. of a WLAN system, but in a mmWave band, a signal is so strong in straightness that it may be greatly affected by an obstacle. To overcome such signal attenuation, etc., analog beamforming based on a directional antenna is required. For analog beamforming, a procedure such as sector level sweeping (SLS), beam refinement protocol (BRP), etc. may be applied. A training (TRN) field may be used for BRP, and this TRN field may also be used for beamforming training, beam tracking, etc.

The existing transmit training (TRN-T) and receive training (TRN-R) fields are defined for the Directional Multi-Gigabit (DMG) technology. However, it is required to define the structure of a TRN field in a new format to refine the inefficiency of the existing TRN field structure while supporting simultaneous performance of a TX BRP and a RX BRP.

Hereinafter, various examples of a new format of a TRN field for BRP according to the present disclosure are described.

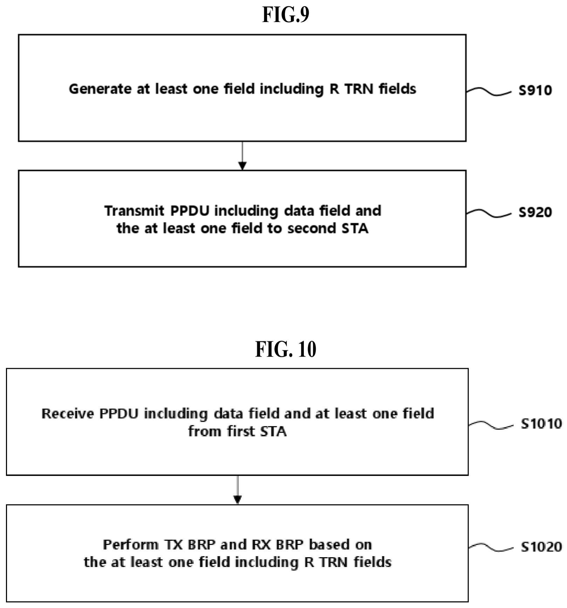

FIG. 9 is a flowchart for describing an example of a method for transmitting training information according to the present disclosure.

In S910, the first STA may generate at least one field including R TRN fields.

Each of the R TRN fields may include N TRN units. Each of the N TRN units may include P TRN subfields. In other words, at least one field may include P*N TRN subfields.

For example, in each of the N TRN units, P may have a fixed value (e.g., 4). R may correspond to the number of receiving sectors per antenna of the second STA receiving a PPDU including at least one field.

For example, the value of N may be indicated through the signal (SIG) field (e.g., a U-SIG field, a UHR-SIG field, or another SIG field) of a preamble or a header of the PPDU. Alternatively, the value of N may be indicated by a control frame or a management frame transmitted in the second band (e.g., a sub-7GHz band) other than the first band (e.g., a mmWave band or a 60GHz band) where a PPDU including at least one field in S910 is transmitted.

Each of the N TRN units may include 1 channel estimation (CE) subfield, and P TRN subfields following a CE subfield.

The sequence of a CE subfield may be based on a sequence where the sequence of a STF (e.g., a STF field at the very front or preamble of a PPDU) located before a CE subfield in a PPDU and the sequence of a LTF (e.g., a LTF field following the STF of a PPDU) are associated. For example, a sequence where a STF sequence and a LTF sequence are associated may correspond to a sequence that sequentially lists a STF sequence and a LTF sequence.

Alternatively, the sequence of a CE subfield in a TRN unit may be based on a LTF (e.g., a LTF field following the STF of a PPDU) located before a CE subfield in a TRN unit within a PPDU.

Alternatively, the sequence of a CE subfield may be based on a sequence where a 1x STF sequence and a 1x LTF sequence are associated.

Alternatively, the sequence of a CE subfield may be based on a 1x LTF sequence.

Here, a 1x STF sequence and/or a 1x LTF sequence may correspond to a predefined sequence irrelevant to a STF and/or a LTF at the very front or preamble of a PPDU.

For example, a bandwidth supported in a WLAN system corresponding to a 1x numerology (e.g., an IEEE 802.11ac (VHT)-based system) is 20, 40, 80 and 160MHz. For a bandwidth of 20, 40, 80 and 160MHz, the number of 64, 128, 256 and 512 subcarriers is defined, respectively, and a tone plan for the number and position of DC subcarriers, guard subcarriers, null subcarriers, etc. is defined. In addition, subcarrier spacing is defined as 312.5kHz, an OFDM symbol length excluding a cyclic prefix (CP) length is 3.2us, and an applicable guard interval is defined as 0.8us and 0.4us. For this, N-fold upclocking may be applied. N may correspond to a value such as 2, 4, 8, etc. When N-fold upclocking is applied, the bandwidth of a 1x numerology may be defined as one of 20*N, 40*N, 80*N or 160*N MHz; a subcarrier spacing may be defined as 312.5*NkHz; the number of subcarriers may be defined as one of 64, 128, 256 or 512; and an OFDM symbol length excluding a CP length may be defined as 3.2/N us. Here, the candidate values of a guard interval may be defined as 1/N times the guard interval of a 1x numerology (e.g., 0.8/N and 0.4/N us). Regarding the above-described upclocking, a value such as a bandwidth, a subcarrier spacing, the number of subcarriers, an OFDM symbol length, a guard interval, etc. is exemplary, and various examples that N times or 1/N times are applied to a predetermined value for a bandwidth, a subcarrier spacing, the number of subcarriers, an OFDM symbol length, a guard interval, etc. before applying upclocking may be included in the scope of the present disclosure.

For example, a 1x STF sequence may be $S_{-28:28}$ in the following equation for a 20*N Mhz bandwidth, $S_{-58:58}$ in the following equation for a 40*N Mhz bandwidth, $S_{-122:122} = \{S_{-58:58}, 0, 0, 0, 0, 0, 0, 0, 0, 0, 0, 0, S_{-58:58}\}$ for a 80*N Mhz bandwidth and $S_{-250:250} = \{S_{-122:122}, 0, 0, 0, 0, 0, 0, 0, 0, 0, 0, 0, S_{-122:122}\}$ for a 160*N MHz bandwidth.

【Equation 1】

$$S_{-28,28} = \sqrt{1/2}$$
$$\{0, 0, 0, 0, 1+j, 0, 0, 0, -1-j, 0, 0, 0, 1+j, 0, 0, 0, -1-j, 0, 0, 0, -1-j, 0, 0, 0, 1+j, 0, 0, 0,$$
$$0, 0, 0, 0, -1-j, 0, 0, 0, -1-j, 0, 0, 0, 1+j, 0, 0, 0, 1+j, 0, 0, 0, 1+j, 0, 0, 0, 1+j, 0, 0, 0\}$$

$$S_{-58,58} = \sqrt{1/2}$$
$$\{0, 0, 1+j, 0, 0, 0, -1-j, 0, 0, 0, 1+j, 0, 0, 0, -1-j, 0, 0, 0, -1-j, 0, 0, 0, 1+j, 0, 0, 0,$$
$$0, 0, 0, 0, -1-j, 0, 0, 0, -1-j, 0, 0, 0, 1+j, 0, 0, 0, 1+j, 0, 0, 0, 1+j, 0, 0, 0, 1+j, 0, 0, 0, 0, 0,$$
$$0, 0, 0, 0, 0, 0, 0, 0, 0, 1+j, 0, 0, 0, -1-j, 0, 0, 0, 1+j, 0, 0, 0, -1-j, 0, 0, 0, -1-j, 0, 0, 0, 1+j,$$
$$0, 0, 0, 0, 0, 0, 0, -1-j, 0, 0, 0, -1-j, 0, 0, 0, 1+j, 0, 0, 0, 1+j, 0, 0, 0, 1+j, 0, 0, 0, 1+j, 0, 0\}$$

For example, a 1x LTF sequence may be $LTF_{-28:28} = \{1, 1, LTF_{left}, 0, LTF_{right}, -1, -1\}$ for a 20*N Mhz bandwidth, $LTF_{-58:58} = \{LTF_{left}, 1, LTF_{right}, -1, -1, -1, 1, 0, 0, 0, -1, 1, 1, -1, LTF_{left}, 1, LTF_{right}\}$ for a 40*N Mhz bandwidth, $LTF_{-122:122} = \{LTF_{left}, 1, LTF_{right}, -1, -1, -1, 1, 1, -1, 1, -1, 1, 1, -1, LTF_{left}, 1, LTF_{right}, 1, -1, 1, -1, 0, 0, 0, 1, -1, -1, 1, LTF_{left}, 1, LTF_{right}, -1, -1, -1, 1, 1, -1, 1, -1, 1, 1, -1, LTF_{left}, 1, LTF_{right}\}$ for a 80*N Mhz bandwidth and $LTF_{-250:250} = \{LTF_{-122:122}, 0, 0, 0, 0, 0, 0, 0, 0, 0, 0, 0, LTF_{-122:122}\}$ for a 160*N Mhz bandwidth based on $LTF_{left}$ and $LTF_{right}$ in the following equation.

【Equation 2】

$$LTF_{left} = \{1, 1, -1, -1, 1, 1, -1, 1, -1, 1, 1, 1, 1, 1, 1, -1, -1, 1, 1, -1, 1, -1, 1, 1, 1, 1\}$$
$$LTF_{right} = \{1, -1, -1, 1, 1, -1, 1, -1, 1, -1, -1, -1, -1, -1, 1, 1, -1, -1, 1, -1, 1, -1, 1, 1, 1, 1\}$$

The above-described 1x STF sequence and 1x LTF sequence are exemplary, and the scope of the present disclosure is not limited to the example of VHT-STF and VHT-LTF as described above. For example, a 1x STF sequence defined as HE-STF, EHT-STF or xxx-STF (for example, xxx corresponds to UHR or a subsequent WLAN system technology) may be applied as an example of a 1x STF of the present disclosure. Similarly, a 1x LTF sequence defined as HE-LTF, EHT-LTF or xxx-LTF (for example, xxx corresponds to UHR or a subsequent WLAN system technology) may also be applied as an example of 1x LTF of the present disclosure.

The sequence of a TRN subfield may be based on the sequence of a STF located before a TRN subfield in a PPDU (e.g., a STF field at the very front or preamble of a PPDU). Alternatively, the sequence of a TRN subfield may be based on the sequence of a LTF located before a TRN subfield in a PPDU (e.g., a LTF field at the very front or preamble of a PPDU). Alternatively, the sequence of a TRN subfield may be based on a 1x STF sequence. Alternatively, the sequence of a TRN subfield may be based on a 1x LTF sequence.

In S920, the first STA may transmit a PPDU including a data field and at least one field generated in S910 to the second STA.

At least one field may be located after a data field. For example, P*N automatic gain control (AGC) fields may be located between a data field and R TRN fields. In other words, at least one field may include P*N AGC fields and R TRN fields.

The sequence of an AGC field may be based on the sequence of a STF located before the AGC field in a PPDU (e.g., a STF field at the very front or preamble of a PPDU). Alternatively, the sequence of an AGC field may be based on a 1x STF sequence.

P*N AGC fields may correspond to P*N TRN subfields included in all of the N TRN units (each TRN unit includes P TRN subfields). In addition, an AWV for each of the P*N AGC fields may be the same as the AWV of a corresponding TRN subfield.

In each of the N TRN units, an antenna weight vector (AWV) for P TRN subfields may be different from each other.

A frame included in the data field of such a PPDU may include information indicating simultaneous support/-performance of a transmit (TX) BRP and a receive (RX) BRP. Information indicating simultaneous support/performance of a TX BRP and a RX BRP may be included in at least one field in a MAC frame (e.g., a control frame/a management frame) within a data field.

A method described in the example of FIG. 9 may be performed by a first device 100 in FIG. 1. For example, at least one processor 102 of the first device 100 in FIG. 1 may be configured to generate at least one field including R TRN fields; and transmit a PPDU including a data field and at least one field located after the data field to the second STA through at least one transceiver. Furthermore, at least one memory 104 of a first device 100 may store instructions for performing a method described in the example of FIG. 9 or examples described below when executed by at least one processor 102.

FIG. 10 is a flowchart for describing an example of a method for receiving training information according to the present disclosure.

In S1010, the second STA may receive a PPDU including a data field and at least one field from the first STA. At least one field is located after a data field, and may include R TRN fields. For example, at least one field may include an AGC field and R TRN fields. The specific details of an AGC field and a TRN field are the same as described by referring to FIG. 9, so an overlapping description is omitted.

In S1020, the second STA may perform a transmit (TX) BRP and a receive (RX) BRP based on at least one field including R TRN fields. Performing a transmit BRP may include performing feedback on a measurement result based on a TRN field received from the first STA to the first STA. Based on this feedback information, the first STA may optimally determine an optimal transmission beam. Performing a receive BRP may include determining the optimal reception beam of the second STA based on a TRN field received from the first STA.

A method described in the example of FIG. 10 may be performed by a second device 200 in FIG. 1. For example, at least one processor 202 of the second device 200 in FIG. 1 may be configured to receive a PPDU including a data field and at least one field located after a data field from the first STA through the at least one transceiver and perform a TX BRP and a RX BRP based on the at least one field including R TRN fields. Furthermore, at least one memory 204 of a second device 200 may store instructions for performing a method described in the example of FIG. 10 or examples described below when executed by at least one processor 202.

The examples of FIGS. 9 and 10 may correspond to some of the various examples of the present disclosure. Hereinafter, various examples of the present disclosure including the example of FIGS. 9 and 10 will be described in more detail.

In embodiments described below, various examples of a TRN field are described by mainly assuming a mmWave band, but various examples of the present disclosure are not limited to a mmWave band, and various examples of the present disclosure may be applied equally to other frequency bands other than a mmWave band to overcome signal attenuation, etc.

In embodiments described below, the sequence of a TRN field may be defined based on a predetermined STF sequence and/or LTF sequence. For example, a STF sequence and/or a LTF sequence to be used in a mmWave band may be defined identically to a STF sequence and/or a LTF sequence defined in the existing WLAN system or may be newly defined. For example, the existing STF sequence and LTF sequence may be an EHT-STF sequence and an EHT-LTF sequence used in a sub-7GHz band, but is not limited thereto, and a newly defined sequence may be applied.

Embodiment 1

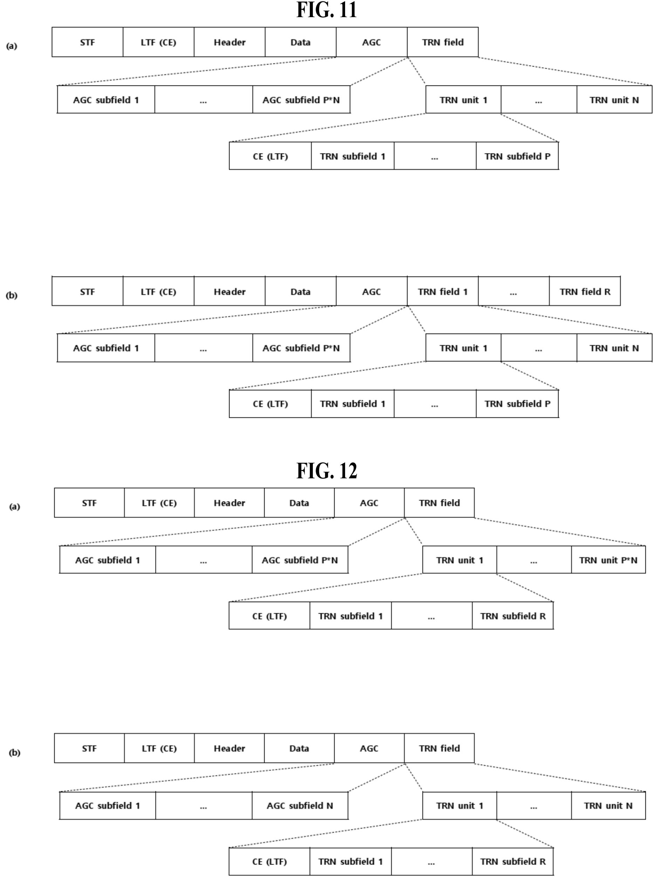

FIGS. 11 to 14 are a diagram showing examples of a BRP PPDU format according to the present disclosure. A BRP PPDU in FIGS. 11 to 14 may be, for example, a PPDU transmitted and received for a BRP, etc. in a mmWave band.

The example of FIG. 11(a) shows a format in which a BRP PPDU includes one AGC field and one TRN field following a data field.

An AGC field may include P*N AGC subfields. An AGC field may be used to maintain a signal size within a predetermined scope.

A TRN field may include N TRN units. Each TRN unit may include one CE (or LTF) subfield and P TRN subfields. In other words, a total of P*N TRN subfields may be included in one BRP PPDU. The CE (or LTF) subfield of a TRN unit may be used for channel estimation. For example, P=4.

For a RX BRP, an AGC subfield, the CE (or LTF) subfield of a TRN unit and the AWV of a TRN subfield may be set to be the same as the AWV of a preamble/a data field.

For a TX BRP, the AWV of the CE (or LTF) subfield of a TRN unit may be set to be the same as the AWV of a preamble/data. The AWV of each TRN subfield within a TRN unit may be different. The AWV of each AGC subfield may be set to be the same as the AWV of each TRN subfield corresponding to a corresponding AGC. For example, the AWV of the first AGC subfield may be set to be the same as the AWV of the first TRN subfield, the AWV of the second AGC subfield may be set to be the same as the AWV of the second TRN subfield, .... the AWV of the P*N-th AGC subfield may be set to be the same as the AWV of the P*N-th TRN subfield.

The value of N may be indicated through the SIG field of the header (or preamble) of a BRP PPDU. For example, the U-SIG field and/or xxx-SIG (e.g., xxx corresponds to UHR or a subsequent WLAN system technology) of the header/preamble of a BRP PPDU may include a field indicating the value of N. Alternatively, the value of N may be indicated through a control frame/a management frame (e.g., a frame providing information about an operation in a mmWave band or a 60GHz band) transmitted and received in the second frequency band (e.g., a sub-7GHz band) other than the first band (e.g., a mmWave band or a 60GHz band) where a BRP PPDU is transmitted/received. For example, N may correspond to the number of sectors of a transmitter, and transmission sector sweep may be supported through N TRN units.

For a RX BRP, an AGC subfield may not exist. Alternatively, for a TX BRP, an AGC subfield may not exist.

An AGC subfield may be the same as a STF at the very front of a PPDU. In other words, the sequence of an AGC subfield may be the same as the sequence of a STF. The sequence of a STF may be a 1x STF or a 2x STF. A 2x STF may correspond to a sequence where a tone interval to which a sequence is mapped is 1/2 (i.e., a subcarrier spacing is 1/2) compared to a 1x STF. Alternatively, when the sequence of an AGC subfield is always defined identically to a 1x STF sequence, overhead may be additionally reduced. Here, although the sequence of an AGC subfield and a STF sequence are the same, an A WV for an AGC subfield may be applied as described above.

The sequence of the CE (or LTF) subfield of a TRN unit may be the same as the associated sequence of the sequence of a STF located at the very front of a PPDU and the sequence of a LTF (i.e., a LTF located after the STF of a PPDU and before a header) (hereinafter referred to as STF + LTF). Alternatively, the sequence of the CE (or LTF) subfield of a TRN unit may be the same as the sequence of a LTF located at the front of a PPDU. The sequence of a LTF located at the front of a PPDU may be a 1x LTF or a 2x LTF. A 2x LTF may correspond to a sequence where a tone interval to which a sequence is mapped is 1/2 (i.e., a subcarrier spacing is 1/2) compared to a 1x LTF. Alternatively, the sequence of the CE (or LTF) subfield of a TRN unit may always be defined identically to the associated sequence of a 1x STF sequence and a 1x LTF sequence (hereinafter, referred to as 1x STF + 1x LTF). Alternatively, the sequence of the CE (or LTF) subfield of a TRN unit may always be defined identically to a 1x LTF sequence. Here, even when the sequence of the CE (or LTF) subfield of a TRN unit and a STF + LTF sequence (or a LTF sequence) are the same, an AWV for the CE (or LTF) subfield of a TRN unit may be applied as described above.

The sequence of a TRN subfield may be the same as the sequence of a STF located at the very front of a PPDU. Alternatively, the sequence of a TRN subfield may be the same as the sequence of a LTF located before a PPDU (i.e., a LTF located after the STF of a PPDU and before a header). Alternatively, the sequence of a TRN subfield may always be defined identically to a 1x STF sequence or to a 1x LTF sequence. Here, although the sequence of a TRN subfield and a STF sequence or a LTF sequence are the same, an AWV for a TRN subfield may be applied as described above.

## Embodiment 2

The example of FIG. 11(b) shows a format in which a BRP PPDU includes one AGC field and R TRN fields following a data field. This BRP PPDU format may support performing a TX BRP on a transmitter side and a RX BRP on a receiver side simultaneously.

Compared to a BRP PPDU format in FIG. 11(a) including one TRN field, a BRP PPDU format in FIG. 11(b) includes R TRN fields. The value of R may correspond to the number of RX sectors of a receiver.

An AGC field may include P*N AGC subfields. An AGC field may be used to maintain a signal size within a predetermined scope.

Each of the R TRN fields may include N TRN units. In other words, in a BRP PPDU, N TRN units may be repeated R times (or, a structure for transmission sector sweep may be repeated R times). Each TRN unit may include one CE (or LTF) subfield and P TRN subfields. In other words, a total of P*N*R TRN subfields may be included in one BRP PPDU. The CE (or LTF) subfield of a TRN unit may be used for channel estimation. For example, P=4.

The AWV of the CE (or LTF) subfield of a TRN unit may be set to be the same as the AWV of a preamble/data. The AWV of each TRN subfield within N TRN unit of each of the R TRN fields may be different.

P*N AGC subfields may correspond to P*N TRN subfields within N TRN unit of each of the R TRN fields. In other words, P*N AGC subfields may correspond to P*N TRN subfields of the first TRN field, respectively, and P*N AGC subfields may correspond to P*N TRN subfields of the second TRN field, respectively. In this case, the AWV of each AGC subfield may be set to be the same as the AWV of each TRN subfield corresponding to a corresponding AGC. For example, the AWV of the first AGC subfield may be set to be the same as the AWV of the first TRN subfield within each TRN field, the AWV of the second AGC subfield may be set to be the same as the AWV of the second TRN subfield within each TRN field, .... the A WV of the P*N-th AGC subfield may be set to be the same as the AWV of the P*N-th TRN subfield within each TRN field. The AWV of the P*N-th AGC subfield may be set to be the same as the AWV of the P*N-th TRN subfield within each TRN field.

The example of FIG. 12(a) shows a PPDU format in which one AGC field includes P*N AGC subfields and one TRN field includes P*N TRN units. Each TRN unit may include one CE (or LTF) subfield and R TRN subfields. In other words, P*N TRN units and P*N*R TRN subfields may be included in one PPDU.

The example of FIG. 12(b) shows a PPDU format in which one AGC field includes N AGC subfields and one TRN field includes N TRN units. Each TRN unit may include one CE (or LTF) subfield and R TRN subfields. In other words, N TRN units and N*R TRN subfields may be included in one PPDU.

In the example of FIG. 12(a) and FIG. 12(b), the AWV of the CE (or LTF) subfield of a TRN unit may be set to be the same as the AWV of a preamble/data. The AWV of TRN subfields in each TRN unit may be set as the same AWV, and a different AWV may be applied to each TRN unit. In other words, the first AWV may be commonly applied to R TRN subfields in the first TRN unit, and the second AWV may be commonly applied to R TRN subfields in the second TRN unit. The AWV of the first AGC subfield may be applied to R TRN subfields of the first TRN unit, and the AWV of the second AGC subfield may be applied to R TRN subfields of the second TRN unit. In other words, a plurality of AGC subfields may correspond to a plurality of TRN units in order.

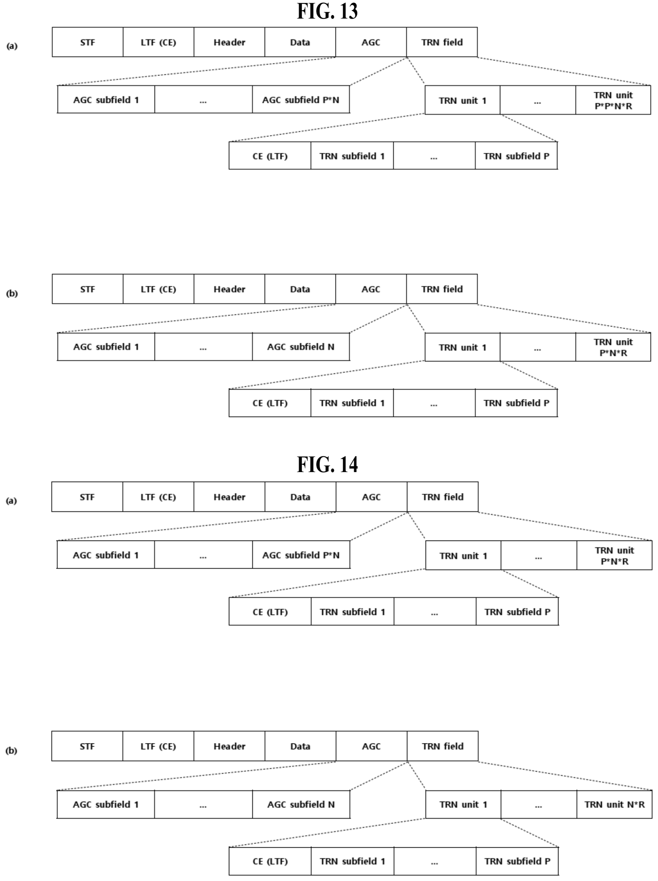

The example of FIG. 13(a) shows a PPDU format in which one AGC field includes P*N AGC subfields and one TRN field includes P*P*N*R TRN units. Each TRN unit may include one CE (or LTF) subfield and P (or another fixed number of) TRN subfields.

The example of FIG. 13(b) shows a PPDU format in which one AGC field includes N AGC subfields and one TRN field includes P*N*R TRN units. Each TRN unit may include one CE (or LTF) subfield and P (or another fixed number of) TRN subfields.

In the example of FIG. 13(a) and FIG. 13(b), the AWV of the CE (or LTF) subfield of a TRN unit may be set to be the same as the AWV of a preamble/data. The AWV of TRN subfields in R TRN units may be set as the same AWV, and a different AWV may be applied to TRN subfields in R TRN units. In other words, the first AWV may be commonly applied to P*R TRN subfields in the first R TRN units, and the second AWV may be commonly applied to P*R TRN subfields in the second R TRN units. The AWV of the first AGC subfield may be applied to P*R TRN subfields of the first R TRN units, and the AWV of the second AGC subfield may be applied to P*R TRN subfields of the second R TRN units. In other words, a plurality of AGC subfields may correspond to a plurality of TRN unit groups (one group includes R TRN units) in order.

The example of FIG. 14(a) shows a PPDU format in which one AGC field includes P*N AGC subfields and one TRN field includes P*N*R TRN units. Each TRN unit may include one CE (or LTF) subfield and P (or another fixed number of) TRN subfields.

The example of FIG. 14(b) shows a PPDU format in which one AGC field includes N AGC subfields and one TRN field includes N*R TRN units. Each TRN unit may include one CE (or LTF) subfield and P (or another fixed number of) TRN subfields.

In the example of FIG. 14(a) and FIG. 14(b), the AWV of the CE (or LTF) subfield of a TRN unit may be set to be the same as the AWV of a preamble/data. The AWV of R consecutive (consecutive excluding a CE subfield) TRN subfields may be set as the same AWV, and a different AWV may be applied to different R consecutive TRN subfields. In other words, the first AWV may be commonly applied to the first R consecutive TRN subfields, and the second AWV may be commonly applied to the second R consecutive TRN subfields. The AWV of the first AGC subfield may be applied to the first R consecutive TRN subfields, and the AWV of the second AGC subfield may be applied to the second R consecutive TRN subfields. In other words, a plurality of AGC subfields may correspond to a plurality of TRN subfield groups (one group includes R consecutive TRN subfields) in order.

The value of N and/or R may be indicated through the SIG field of the header (or preamble) of a BRP PPDU. For example, the U-SIG field and/or xxx-SIG (e.g., xxx corresponds to UHR or a subsequent WLAN system technology) of the header/preamble of a BRP PPDU may include a field indicating the value of N and/or R. Alternatively, the value of N and/or R may be indicated through a control frame/a management frame (e.g., a frame providing information about an operation in a mmWave band or a 60GHz band) transmitted and received in the second frequency band (e.g., a sub-7GHz band) other than the first band (e.g., a mmWave band or a 60GHz band) where a BRP PPDU is transmitted/received.

In the examples of a PPDU format described above, an AGC field may not exist.

The sequence of an AGC subfield may be the same as a STF + LTF sequence located at the front of a PPDU. Alternatively, the sequence of an AGC subfield may be the same as the sequence of a LTF located at the front of a PPDU. Alternatively, the sequence of an AGC subfield may always be defined identically to a 1x STF + 1x LTF sequence. Alternatively, the sequence of an AGC subfield may always be defined identically to a 1x LTF sequence. Here, although the sequence of an AGC subfield and a STF sequence/a LTF sequence are the same, an AWV for an AGC subfield may be applied as described above.

The sequence of the CE (or LTF) subfield of a TRN unit may be the same as the sequence of a LTF located at the front of a PDU (e.g., a LTF following the STF of a PPDU). Alternatively, the sequence of the CE (or LTF) subfield of a TRN unit may always be defined identically to a 1x LTF sequence. Here, even when the sequence of the CE (or LTF) subfield of a TRN unit and the sequence of a LTF following a STF are the same, an AWV for the CE (or LTF) subfield of a TRN unit may be applied as described above.

The sequence of a TRN subfield may be the same as the sequence of a STF located at the very front of a PPDU. Alternatively, the sequence of a TRN subfield may be the same as the sequence of a LTF located before a PPDU (i.e., a LTF located after the STF of a PPDU and before a header). Alternatively, the sequence of a TRN subfield may always be defined identically to a 1x STF sequence or to a 1x LTF sequence. Here, although the sequence of a TRN subfield and a STF sequence or a LTF sequence are the same, an AWV for a TRN subfield may be applied as described above.

Embodiment 3

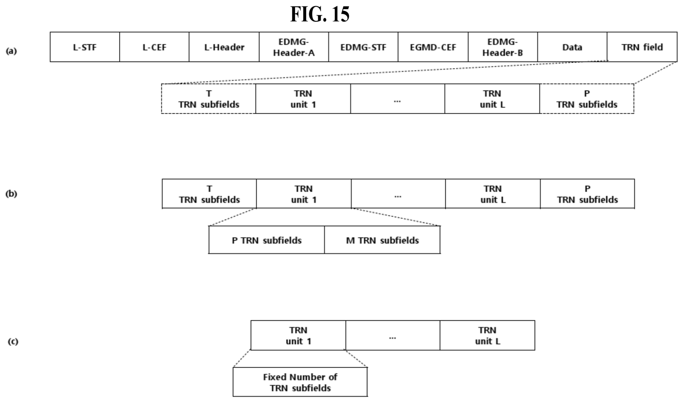

FIG. 15 is a diagram showing examples of an additional BRP PPDU format according to the present disclosure. A BRP PPDU in FIG. 15 may be, for example, a PPDU transmitted and received for a BRP, etc. in a mmWave band.

FIG. 15(a) shows a BRP PPDU format common to the examples of FIGS. 15(b) to 15(d). A TRN field may include L TRN units. A TRN field may further include T TRN subfields and/or P TRN subfields.

In a PPDU format for a TX BRP or a RX/TX BRP (i.e., supporting a RX BRP and a TX BRP simultaneously) in FIG. 15(b), a TRN field may include T TRN subfields, L TRN units and P TRN subfields. One TRN unit may include P TRN subfields and M TRN subfields. In a PPDU format for a TX BRP, M TRN subfields may be divided into groups of N consecutive TRN subfields. For example, M TRN subfields may include one or a plurality of groups (i.e., N consecutive TRN subfields).

In a PPDU format for a RX BRP in FIG. 15(c), a TRN field may include L TRN units. One TRN unit may include a fixed number (e.g., 10) of TRN subfields.

The AWV of each of the first T TRN subfields may be set to be the same as the AWV of P TRN subfields in a TRN unit in case of a TX BRP or a RX/TX BRP, and may be set to be the same as the AWV of a preamble/data in case of a RX BRP. The first T TRN subfields may provide a transition interval for processing of a data field and a TRN field.

The AWV of each of the last P TRN subfields may be set to be the same as the AWV of a preamble/a data field. The last P TRN subfields may provide carrier frequency offset (CFO) tracking of the last TRN unit.

The AWV of the P TRN subfields in a TRN unit may be set to be the same as the AWV of a preamble/a data field in case of a TX BRP or a RX/TX BRP. P TRN subfields in a TRN unit may provide AGC and channel estimation.

In case of a TX BRP, the same AWV may be set for N consecutive TRN subfields among the M TRN subfields in a TRN unit, and a different AWV may be applied per the N-th TRN subfield. In other words, among the M TRN subfields in a TRN unit, the first AWV may be commonly applied to the first N consecutive TRN subfields, and the second AWV may be commonly applied to the second N consecutive TRN subfields.

In case of a RX/TX BRP, the same AWV may be set for M TRN subfields in R consecutive TRN units among the L TRN units, and a different AWV may be applied per the R-th TRN unit. In other words, among the L TRN units, the first AWV may be commonly applied to R*M subfields included in the first R consecutive TRN units, and the second AWV may be commonly applied to R*M subfields included in the second R consecutive TRN units.

In case of a RX BRP, a TRN subfield in all TRN units may be set as the same AVW. An AWV applied to a TRN subfield may be the same as the AWV of a preamble/a data field.

A value for information about the number of TRN subfields (i.e., at least one of T, P, M and N) and/or information about the number of TRN units (i.e., at least one of L and R) in examples described above may also be indicated through the SIG field of the header (or preamble) of a BRP PPDU. For example, the U-SIG field and/or xxx-SIG (e.g., xxx corresponds to UHR or a subsequent WLAN system technology) of the header/preamble of a BRP PPDU may include a field indicating the value of T, P, M, N, L, and/or R. Alternatively, the value of T, P, M, N, L, and/or R may be indicated through a control frame/a management frame (e.g., a frame providing information about an operation in a mmWave band or a 60GHz band) transmitted and received in the second frequency band (e.g., a sub-7GHz band) other than the first band (e.g., a mmWave band or a 60GHz band) where a BRP PPDU is transmitted/received.

If the value of T is always fixed to a specific number, a separate indication for the value of T may not be required. Additionally or alternatively, if the value of P is always fixed to a specific number (e.g., 1), a separate indication for the value of P may not be required. Additionally or alternatively, if the value of M is always fixed to a specific number, a separate indication for the value of M may not be required. If the value of N is always fixed to a specific number, a separate indication for the value of N may not be required.

The sequence of the T TRN subfields may be the same as the sequence of a STF (e.g., L-STF or EDMG-STF) located at the front of a PPDU. The sequence of T TRN subfields may always be defined as a 1x STF sequence. Here, although the sequence of T TRN subfields and a STF sequence are the same, an AWV for T TRN subfields may be applied as described above.

The sequence of P TRN subfields in a TRN unit may be the same as a STF (e.g., L-STF, EDMG-STF) + LTF (e.g., L-CEF, EDMG-CEF) sequence located at the front of a PPDU. Alternatively, the sequence of P TRN subfields in a TRN unit may be the same as a STF (e.g., L-CEF, EDMG-CEF) sequence located at the front of a PPDU. Alternatively, the sequence of P TRN subfields in a TRN unit may always be defined identically to a 1x STF + 1x LTF sequence. Alternatively, the sequence of P TRN subfields in a TRN unit may always be defined identically to a 1x LTF sequence. Alternatively, some of the P TRN subfields in a TRN unit may be the same as the sequence of a STF (e.g., L-STF, EDMG-STF, 1x STF), and the remaining may be the same as the sequence of a LTF (e.g., L-CEF, EDMG-CEF, 1x LTF). Here, even when the sequence of P TRN subfields in a TRN unit and a STF sequence/a LTF sequence are the same, an AWV for P TRN subfields in a TRN unit may be applied as described above.

The sequence of M TRN subfields in a TRN unit may be the same as the sequence of a STF (e.g., L-STF, EDMG-STF) or may be the same as a LTF (e.g., L-CEF, EDMG-CEF) sequence located at the front of a PPDU. Alternatively, the sequence of M TRN subfields in a TRN unit may always be defined identically to a 1x STF sequence or a 1x LTF sequence. Here, even when the sequence of M TRN subfields in a TRN unit and a STF sequence or a LTF sequence are the same, an AWV for M TRN subfields in a TRN unit may be applied as described above.

The sequence of the last P TRN subfields may be the same as the sequence of P TRN subfields in a TRN unit.

Instead of applying a different sequence according to the type/position of a TRN subfield as in examples described above, the same sequence may be applied to all TRN subfields in a TRN field. A sequence commonly applied to all TRN subfields may be defined identically to the sequence of a STF (e.g., L-STF, EDMG-STF) located at the front of a PPDU, or identically to a LTF (e.g., L-CEF, EDMG-CEF) sequence, or identically to a STF + LTF sequence, or identically to a 1x STF sequence, or identically to a 1x LTF sequence, or identically to a 1x STF + 1x LTF sequence. Here, although the same sequence is applied to all TRN subfields, an AWV may be applied as described above according to the type/position of each TRN subfield.

In the existing WLAN system, when simultaneous support of a TX BRP and a RX BRP is impossible or when simultaneous support of a RX/TX BRP is performed, it is defined as a complex TRN field format. In the present disclosure, in a new PPDU format for simultaneous support of a TX BRP and a RX BRP, efficient beamforming training, etc. may be supported through a simple format, unlike the existing TRN field structure.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed by the present disclosure is mainly described based on an example applied to an IEEE 802.11-based system, 5G system, but may be applied to various WLAN or wireless communication systems other than the IEEE 802.11-based system.

**Claims**

1.  A method performed by a first station (STA) in a wireless local area network (WLAN) system, the method comprising:

    generating at least one field including R training (TRN) fields; and
    transmitting, to a second STA, a physical layer protocol data unit (PPDU) including a data field, and the at least one field located after the data field,
    wherein each of the R TRN fields includes N TRN units, and
    wherein each of the N TRN units includes P TRN subfields.

2.  The method of Claim 1, wherein the each of the N TRN units includes:

    1 channel estimation (CE) subfield, and
    the P TRN subfields following the CE subfield.

3.  The method of Claim 2, wherein a sequence of the CE subfield is based on:

    a sequence where a sequence of a short training field (STF) and a sequence of a long training field (LTF) located before the CE subfield in the PPDU are associated,
    the sequence of the LTF located before the CE subfield in the PPDU,
    a sequence where a 1x STF sequence and a 1x LTF sequence are associated, or
    the 1x LTF sequence.

4.  The method of Claim 1, wherein a sequence of the TRN subfield is based on:

    a sequence of a STF located before the TRN subfield in the PPDU,
    a sequence of a LTF located before the TRN subfield in the PPDU,
    a 1x STF sequence, or
    a 1x LTF sequence.

5.  The method of Claim 1, wherein:
    an antenna weight vector (AWV) for the P TRN subfields is different from each other in the each of the N TRN units.

6.  The method of Claim 1, wherein:
    the P is 4 in the each of the N TRN units.

7.  The method of Claim 1, wherein:
    P*N automatic gain control (AGC) fields are located between the data field and the R TRN fields.

8.  The method of Claim 7, wherein a sequence of the AGC field is based on:

    a sequence of a STF located before the AGC field in the PPDU, or
    a 1x STF sequence.

9.  The method of Claim 1, wherein:
    the P*N AGC fields correspond to P*N TRN subfields included in the N TRN units, respectively.

10. The method of Claim 9, wherein:
    an AWV for each of the P*N AGC fields is equal to an AWV of a corresponding TRN subfield.

11. The method of Claim 1, wherein:
    the R corresponds to a number of receiving sectors per antenna of the second STA.

12. The method of Claim 1, wherein the N is indicated through:

    a signal (SIG) field of a preamble or a header of the PPDU, or
    a control frame or a management frame transmitted from a second band other than a first band from which the PPDU is transmitted.

13. The method of Claim 1, wherein:
a frame included in a data field of the PPDU includes information indicating a simultaneous support of a transmit (TX) beam refinement protocol (BRP) and a receive (RX) BRP.

14. A first station (STA) device in a wireless local area network (WLAN) system, the device comprising:

at least one transceiver; and
at least one processor connected to the at least one transceiver,
wherein the at least one processor is configured to:

generate at least one field including R training (TRN) fields; and
transmit, through the at least one transceiver, to a second STA, a physical layer protocol data unit (PPDU) including a data field, and the at least one field located after the data field,

wherein each of the R TRN fields includes N TRN units, and
wherein each of the N TRN units includes P TRN subfields.

15. A method performed by a second station (STA) in a wireless local area network (WLAN) system, the method comprising:

receiving, from a first STA, a physical layer protocol data unit (PPDU) including a data field, and at least one field located after the data field; and
performing a transmit (TX) beam refinement protocol (BRP) and a receive (RX) BRP based on the at least one field including R training (TRN) fields,
wherein each of the R TRN fields includes N TRN units, and
wherein each of the N TRN units includes P TRN subfields.

16. A second station (STA) device in a wireless local area network (WLAN) system, the device comprising:

at least one transceiver; and
at least one processor connected to the at least one transceiver,
wherein the at least one processor is configured to:

receive, through the at least one transceiver, from a first STA, a physical layer protocol data unit (PPDU) including a data field, and at least one field located after the data field; and
perform a transmit (TX) beam refinement protocol (BRP) and a receive (RX) BRP based on the at least one field including R training (TRN) fields,

wherein each of the R TRN fields includes N TRN units, and
wherein each of the N TRN units includes P TRN subfields.

17. A processing device configured to control a station (STA) in a wireless local area network (WLAN) system, the processing device comprising:

at least one processor; and
at least one computer memory operably connected to the at least one processor, and based on being executed by the at least one processor, storing instructions for performing a method according to any one claim of Claim 1 to Claim 11.

18. At least one non-transitory computer-readable medium storing at least one instruction, wherein:
the at least one instruction controls a device to perform a method according to any one claim of Claim 1 to Claim 11 in a wireless local area network (WLAN) system by being executed by at least one processor.

## FIG.1

## FIG.2

802.11 Components

BSS 1
STA 1
STA 2
AP
DSM
ESS
DS
AP
STA 3
STA 4
BSS 2

## FIG.3

STA — AP

S310 — Probe Request / Probe Response — Discovery

S320 — Authentication Request / Authentication Response — Authentication

S330 — Association Request / Association Response — Association

S340 — RSNA Request / RSNA Response — Security setup

## FIG.4

| busy | Occupied Medium |
| --- | --- |

⇩ Packet arrived at MAC

| bo$_e$ | Elapsed Backoff time |
| --- | --- |

| bo$_r$ | Residual Backoff time |
| --- | --- |

## FIG.5

**FIG.6**

EP 4 645 930 A1

| STF | LTF | SIG | ⋯ | DATA |
|-----|-----|-----|---|------|

| SERVICE | PSDU | PPDU TAIL | PAD |
|---------|------|-----------|-----|

| OCTETS:2 | 2 | 6 | 6 | 6 | 2 | 6 | 2 | 4 | 0-7951 | 4 |
|---|---|---|---|---|---|---|---|---|---|---|
| FRAME CONTROL | DURATION /ID | ADDRESS 1 | ADDRESS 2 | ADDRESS 3 | SEQUENCE CONTROL | ADDRESS 4 | QoS CONTROL | HT CONTROL | FRAME BODY | FCS |

# FIG.7

(a) PPDU Format(IEEE 802.11a/g)

(b) HT PPDU Format(IEEE 802.11n)

(c) VHT PPDU Format(IEEE 802.11ac)

(d) HE PPDU Format(IEEE 802.11ax)

(e) EHT MU PPDU format(IEEE 802.11be)

(f)

EP 4 645 930 A1

**FIG.8**

| | | |
|---|---|---|
| U.S. (57.00GHz-71.00GHz) | | |
| EU (57.00GHz-66.00GHz) | | |
| South Korea (57.00GHz-64.00GHz) | | |
| Japan (57.00GHz-66.00GHz) | | |
| Australia (59.40GHz-62.90GHz) | | |
| China (59.00GHz-64.00GHz) | | |

Channel 1 | Channel 2 | Channel 3 | Channel 4 | Channel 5 | Channel 6

57.00 GHz — 57.24 GHz — 59.40 GHz — 61.56 GHz — 63.72 GHz — 65.88 GHz — 68.04 GHz — 70.20 GHz — 71.00 GHz

## FIG.9

Generate at least one field including R TRN fields —— S910

Transmit PPDU including data field and
the at least one field to second STA —— S920

## FIG. 10

Receive PPDU including data field and at least one field
from first STA —— S1010

Perform TX BRP and RX BRP based on
the at least one field including R TRN fields —— S1020

# FIG. 11

(a)

| STF | LTF (CE) | Header | Data | AGC | TRN field |

| AGC subfield 1 | ... | AGC subfield P*N | | TRN unit 1 | ... | TRN unit N |

| CE (LTF) | TRN subfield 1 | ... | TRN subfield P |

(b)

| STF | LTF (CE) | Header | Data | AGC | TRN field 1 | ... | TRN field R |

| AGC subfield 1 | ... | AGC subfield P*N | | TRN unit 1 | ... | TRN unit N |

| CE (LTF) | TRN subfield 1 | ... | TRN subfield P |

# FIG. 12

(a)

| STF | LTF (CE) | Header | Data | AGC | TRN field |

| AGC subfield 1 | ... | AGC subfield P*N | | TRN unit 1 | ... | TRN unit P*N |

| CE (LTF) | TRN subfield 1 | ... | TRN subfield R |

(b)

| STF | LTF (CE) | Header | Data | AGC | TRN field |

| AGC subfield 1 | ... | AGC subfield N | | TRN unit 1 | ... | TRN unit N |

| CE (LTF) | TRN subfield 1 | ... | TRN subfield R |

## FIG. 13

(a)

| STF | LTF (CE) | Header | Data | AGC | TRN field |

| AGC subfield 1 | ... | AGC subfield P*N | | TRN unit 1 | ... | TRN unit P*P*N*R |

| CE (LTF) | TRN subfield 1 | ... | TRN subfield P |

(b)

| STF | LTF (CE) | Header | Data | AGC | TRN field |

| AGC subfield 1 | ... | AGC subfield N | | TRN unit 1 | ... | TRN unit P*N*R |

| CE (LTF) | TRN subfield 1 | ... | TRN subfield P |

## FIG. 14

(a)

| STF | LTF (CE) | Header | Data | AGC | TRN field |

| AGC subfield 1 | ... | AGC subfield P*N | | TRN unit 1 | ... | TRN unit P*N*R |

| CE (LTF) | TRN subfield 1 | ... | TRN subfield P |

(b)

| STF | LTF (CE) | Header | Data | AGC | TRN field |

| AGC subfield 1 | ... | AGC subfield N | | TRN unit 1 | ... | TRN unit N*R |

| CE (LTF) | TRN subfield 1 | ... | TRN subfield P |

## FIG. 15

(a)

| L-STF | L-CEF | L-Header | EDMG-Header-A | EDMG-STF | EGMD-CEF | EDMG-Header-B | Data | TRN field |
|---|---|---|---|---|---|---|---|---|

| T TRN subfields | TRN unit 1 | ... | TRN unit L | P TRN subfields |
|---|---|---|---|---|

(b)

| T TRN subfields | TRN unit 1 | ... | TRN unit L | P TRN subfields |
|---|---|---|---|---|

| P TRN subfields | M TRN subfields |
|---|---|

(c)

| TRN unit 1 | ... | TRN unit L |
|---|---|---|

| Fixed Number of TRN subfields |
|---|

## INTERNATIONAL SEARCH REPORT

| International application No. |
| --- |
| **PCT/KR2023/021418** |

| A. | CLASSIFICATION OF SUBJECT MATTER |
| --- | --- |

**H04W 16/28**(2009.01)i; **H04B 7/06**(2006.01)i; **H04L 5/00**(2006.01)i; **H04L 27/26**(2006.01)i; **H04W 84/12**(2009.01)i; **H04W 74/00**(2009.01)i

According to International Patent Classification (IPC) or to both national classification and IPC

| B. | FIELDS SEARCHED |
| --- | --- |

Minimum documentation searched (classification system followed by classification symbols)

H04W 16/28(2009.01); H04B 7/0452(2017.01); H04B 7/06(2006.01); H04L 27/26(2006.01); H04L 5/00(2006.01); H04W 48/08(2009.01); H04W 72/04(2009.01); H04W 72/08(2009.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: training (TRN) field, TRN unit, TRN subfield, data field, PPDU, RX beam refinement protocol (BRP), TX BRP, wlan

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2019-0260621 A1 (HUAWEI TECHNOLOGIES CO., LTD.) 22 August 2019 (2019-08-22) See paragraphs [0059]-[0094]; and figures 3-5. | 1-2,6-7,14,17-18 |
| Y | | 12,15-16 |
| A | | 3-5,8-11,13 |
| Y | US 2021-0007111 A1 (INTEL IP CORPORATION) 07 January 2021 (2021-01-07) See paragraphs [0122]-[0220] and [0276]; claims 1 and 6; and figures 2-4. | 12,15-16 |
| A | US 2022-0294515 A1 (INTERDIGITAL PATENT HOLDINGS, INC.) 15 September 2022 (2022-09-15) See paragraphs [0199]-[0201]; and figure 18. | 1-18 |
| A | WO 2018-118118 A1 (INTEL IP CORPORATION) 28 June 2018 (2018-06-28) See paragraphs [0146]-[0240]; and figure 2. | 1-18 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 March 2024** | **26 March 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/021418**

### C.    DOCUMENTS CONSIDERED TO BE RELEVANT

| Category* | Citation of document, with indication, where appropriate, of the relevant passages | Relevant to claim No. |
|---|---|---|
| A | WO 2019-045438 A1 (LG ELECTRONICS INC.) 07 March 2019 (2019-03-07)<br>See paragraphs [0163]-[0165]; and figure 18. | 1-18 |

Form PCT/ISA/210 (second sheet) (July 2022)

**INTERNATIONAL SEARCH REPORT**
Information on patent family members

| International application No. |
| --- |
| **PCT/KR2023/021418** |

| Patent document cited in search report | | | Publication date (day/month/year) | Patent family member(s) | | | Publication date (day/month/year) |
| --- | --- | --- | --- | --- | --- | --- | --- |
| US | 2019-0260621 | A1 | 22 August 2019 | CN | 109923841 | A | 21 June 2019 |
| | | | | CN | 109923841 | B | 12 January 2021 |
| | | | | EP | 3531645 | A1 | 28 August 2019 |
| | | | | EP | 3531645 | A4 | 18 March 2020 |
| | | | | EP | 3531645 | B1 | 10 March 2021 |
| | | | | US | 11025466 | B2 | 01 June 2021 |
| | | | | WO | 2018-082071 | A1 | 11 May 2018 |
| US | 2021-0007111 | A1 | 07 January 2021 | US | 10638493 | B2 | 28 April 2020 |
| | | | | US | 10945273 | B2 | 09 March 2021 |
| | | | | US | 11438907 | B2 | 06 September 2022 |
| | | | | US | 11445520 | B2 | 13 September 2022 |
| | | | | US | 2019-0090253 | A1 | 21 March 2019 |
| | | | | US | 2020-0137767 | A1 | 30 April 2020 |
| | | | | US | 2021-0007112 | A1 | 07 January 2021 |
| US | 2022-0294515 | A1 | 15 September 2022 | CN | 110999100 | A | 10 April 2020 |
| | | | | CN | 110999100 | B | 28 February 2023 |
| | | | | CN | 116192208 | A | 30 May 2023 |
| | | | | EP | 3639384 | A1 | 22 April 2020 |
| | | | | KR | 10-2020-0028894 | A | 17 March 2020 |
| | | | | KR | 10-2558307 | B1 | 20 July 2023 |
| | | | | US | 11349546 | B2 | 31 May 2022 |
| | | | | US | 2021-0143887 | A1 | 13 May 2021 |
| | | | | US | 2023-0388000 | A1 | 30 November 2023 |
| | | | | WO | 2018-232101 | A1 | 20 December 2018 |
| WO | 2018-118118 | A1 | 28 June 2018 | None | | | |
| WO | 2019-045438 | A1 | 07 March 2019 | None | | | |

Form PCT/ISA/210 (patent family annex) (July 2022)